# EUROPEAN PATENT APPLICATION

(11) **EP 2 637 298 A2**
(43) Date of publication of application: **11.09.2013**
(21) Application number: 13158059.9
(22) Date of filing: 06.03.2013
(51) Int. Cl.: H02P 9/00, H02P 11/00, H02J 3/14

(54) **System power control**

(30) Priority: 06.03.2012 GB 201203935
(71) Applicant: Control Techniques Ltd, Newtown, Powys SY16 3BE (GB)
(72) Inventor: König, Holger Jürgen, 53783 Eitorf (DE)
(74) Representative: Smith, Jeremy Robert

(57) **Abstract**

This disclosure relates to minimising the losses in a power drive system. In particular it relates to detecting excess power and automatically activating and deactivating a system to redirect the excess power away from the power drive system into the supply grid. A method of controlling power for a system is disclosed, said system comprising a first controller (14), a motor (16) for driving a load, and supply means (12) for supplying power to said motor (16); said method comprising: monitoring a signal representative of power within the system; using said signal to determine if the power within the system exceeds a first threshold; and if it is determined that said first threshold has been exceeded, activating the first controller (14) to supply power from the system to an output.

## Description

The invention relates to minimising the losses in a power drive system. In particular it relates to detecting excess power and automatically activating and deactivating a system to redirect the excess power away from the power drive system into the supply grid.

### Background

Improving efficiency and cost effectiveness is an important goal for a wide range of systems including power drive systems. In power drive systems, for example those which include an inverter supplying a motor for driving a load, a source of possible inefficiency is the presence of more electrical power within the system than it actually requires for operation at that time, which leads to energy dissipation. For example, at times during operation of the system there may be dissipation of the energy generated by a load braked by the motor. This excess may be dissipated in a manner that is not useful to the operation of the system, for example it might be dissipated as excess heat..

Existing methods to remove excess power from a power drive system include the use of a so-called "brake resistor" to dissipate the excess power as heat to the environment. Alternative known methods which are more efficient than mere dissipation of excess power include the use of an inverter to feed excess power back to an electrical supply such as the electrical supply which is supplying electrical power to the system itself. Conventionally such an inverter for feeding excess power back into the electrical supply is also used to control power supply to the power drive system and so must be activated at all time. The actual operation of that inverter therefore uses a considerable amount of energy and thus is not very efficient or cost effective. It also has to be rated for supplying the power drive system which requires a much larger power rating than the feed back power which adds to the overall system expense and can also add space requirements.

An invention is set out in the claims.

According to an aspect a method of controlling power for a system is provided wherein that system comprises a first controller, a motor for driving a load and supply means for supplying energy to that motor. The method comprises monitoring a signal that is representative of excess of power and/or of an excess of power within the system, and using said signal to determine whether the power exceeds a first threshold. If it is determined that the first threshold has been exceeded, the method further comprises activating the first controller to supply power (or energy) from the system to an output.

The method may further comprise deactivating the first controller after an amount of energy has been supplied from the system to the output. For example the first controller can be deactivated after a predetermined time period has elapsed or after a predetermined amount of energy has been supplied from the system to the output. Alternatively or additionally, the first controller may be deactivated once it has been determined that the power within the system is below a predetermined level load and/or when it is detected that the amount of power being fed back to the output from the system falls below a second threshold.

The system may also comprise a second controller for controlling the supply of power to the motor. The first controller and/or the second controller may comprise an inverter.

The first threshold may relate to or comprise an instantaneous excess of power by the operation of the system. Therefore the method can be used to control power supply so that any instantaneous excess of energy is fed to an output, for example when instantaneous energy is generated by the load. However the controller can be inactive and so the energy consumption can be minimised when no excess of energy is present.

When power is supplied from the system to an output it may be supplied to an external electrical supply grid. It may be the same supply grid as is used to supply power to the system for operation of the motor.

The first controller may be arranged to alter the voltage, the waveform, the phase angle or any other suitable characteristic of power in the system before it is directed out of the system to an output. The first controller may further include monitoring means for monitoring one or more signals representative of power within the system. The first controller may further comprise a control means wherein, when the first controller is "deactivated", the control means is set to a sleep or stand by mode but the monitoring means can continue to operate.

According to an aspect a system is provided comprising a first controller, a motor for driving a load and supply means for supplying power to said motor. The system is arranged to monitor a signal representative of excess of power within the system and to use that signal to determine whether power and/or an excess of power within the system exceeds a first threshold. If it is determined that said first threshold has been exceeded, the system is arranged to activate the first controller to supply power from the system to an output.

According to an aspect a computer readable medium is provided having computer executable instructions thereon which are adapted to cause a computer system to perform a method for controlling power for the system by monitoring a signal representative of excess of power within the system, using that variable to determine if the power within the system exceeds a threshold and to activate a controller to supply power from the system to an output if it is determined that the threshold has been exceeded.

### Figures

Embodiments will now be described by way of example only with respect to the figures of which:
Figure 1 shows a schematic representation of a power drive system; and
Figure 2 is a flow diagram for a control method for a power drive system.

### Overview

In overview, a method and apparatus are provided for controlling power supply to a system in order to detect any excess energy within the system and to direct any such excess energy away from the system, for example to an electrical supply grid. The method an apparatus can be used to replace conventional means for removing excess energy (or power) from electrical systems such as brake resistors.

The method and apparatus employ a monitoring means for monitoring power within the system over time. The power within the system can be compared to the system's instantaneous power requirements, or to another a set of requirements or threshold, and it is determined whether the power present in the system at a point in time exceeds the power that the system actually requires at that time. If it is determined that there is more power within the system than is necessary at a given time, a controller such as an inverter is activated to redirect the resultant excess energy out of the system, for example towards a supply grid.

The controller responsible for directing energy out of the system to the supply grid is not also responsible for controlling supply of power to the system from the supply grid. Therefore that controller does not need to be switched on at all times. Instead it is only activated when it is actually required for redirecting energy out of the system. When it is not required for that purpose, the controller can be switched off or set to sleep mode or standby mode. In that "switched off", "sleep" or "standby" mode, a monitoring means comprised within the controller - or provided in conjunction with the controller - can continue to operate, but using relatively little power during operation, in order to monitor whether and when the controller should be reactivated. Therefore using the controller does not place a significant energy demand on the system. As a result, the benefit of using the controller to redirect excess power away from the system back towards the supply grid outweigh the cost (in terms of efficiency, environmental cost and/or financial cost) of using that controller intermittently for redirection of excess power.

### Detailed Description

The power control as described herein can be implemented in any suitable power drive system in which excess of electrical energy is instantaneously present. For example it may be implemented in an elevator system (also known as a "lift" system in the UK) wherein a motor is used to move a load such as an elevator cabin and a counterweight. If an elevator system is lowering the heavier part, excess of energy will be instantaneously present. Alternatively or additionally, the power control can be applied to a crane hoist where lowering the load generates instantaneous excess of energy in a power drive system.

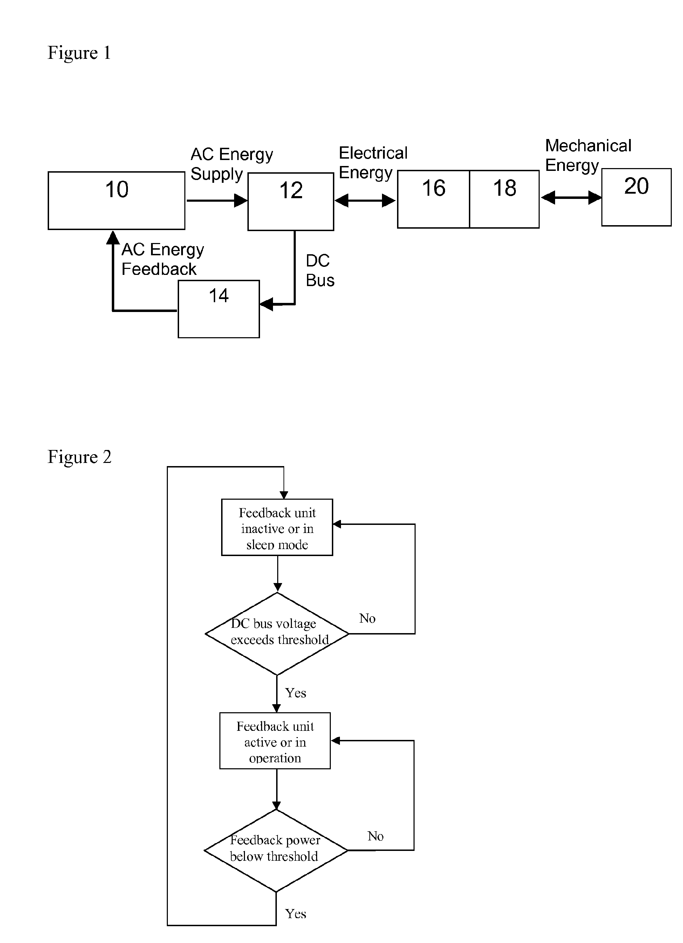

Figure 1 shows a conventional power drive system including a geared motor. Not all power drive systems include gears and having a gear is not required for the control scheme described herein. The power drive system in figure 1 comprises a power supply grid 10, a power drive unit 12, an energy feedback device 14, a motor 16, a gear (or set of gears) 18 and a load 20. The load 20 might be a traction sheave of an elevator or a cable drum of a crane hoist or any other load that can lead to instantaneous energy generation.

The power drive unit 12 in figure 1 may comprise an inverter drive. The power drive unit 12 is supplied with AC energy from a grid supply 10 and can control the energy supply to the motor. The feedback device 14 may comprise a second inverter drive. Such a feedback inverter drive is connected to the power drive unit 12 via the DC bus and to the supply grid 10 via the AC Energy feedback. Therefore, the tasks of supplying energy from the grid to the power drive system and supplying excess energy from the system back to the grid are split between the first and second inverters respectively.

The power drive unit 12 may itself contain a control means and/or it can be controlled by an external controller. Depending on the motion and the load, the power drive unit 12 can supply electrical energy to the motor 16 or absorb electrical energy from it. In operation the motor 16 converts the electrical energy into mechanical energy, which can be transmitted to the gear 18 if present. The mechanical energy is supplied to the load 20 or absorbed from the load 20 depending on the change of the energy of the load at any given time.

The feedback device 14 comprises (or is provided in conjunction with) a monitoring means that is operable to monitor the DC bus voltage signal from the power drive unit 12 throughout operation of the system. It also comprises energy feedback means which acts as a controller and which can be used to control feedback of energy to the power supply grid 10 from the system at appropriate times during operation. However the energy feedback means within the feedback device 14 does not have to be active during the DC bus signal monitoring.

In operation, the feedback device 14 monitors the DC bus voltage signal from the power drive unit 12 to detect whether an excess of power is present in the power drive unit 12. For example, if the motor 16 has to brake, the load 20 energy is regenerated into the power drive unit 12. This regenerated energy will raise the DC bus voltage of the power drive unit 12 which is monitored by the feedback device 14. If the DC bus voltage exceeds a threshold, the energy feedback means within the feedback unit 14 is awakened and activated to feed this excess power back into the grid 10.

The power feedback into the mains is also monitored by the feedback device 14. If the feedback power decreases below another threshold, the energy feedback means within the feedback device 14 is deactivated. It may be put into standby sleep mode to minimise energy consumption. This sequence is shown in the flow diagram of figure 2.

Therefore an efficient system and method for detecting excess power (or energy) within a power drive system and redirecting any such excess power back to the electrical supply grid is provided. Because the feedback device 14, or at least the energy feedback means within that feedback device 14, does not have to be active at all times during operation of the system, a significant saving is made in terms of energy consumption as compared to conventional set ups wherein the same (high-rated) inverter that controls energy from the supply grid to the motor is also responsible for detecting excess power in the system and rerouting it back to the power supply grid. The energy feedback device 14 which is used as described herein for feeding energy back to the power supply grid 10 can be much lower rated than the power supply inverter or power drive unit 12 needs to be.

To increase the efficiency of the system yet further, the feedback device 14 (or a monitoring device used in conjunction therewith) can also monitor how much energy is being fed back from the power drive system 12 to the power supply grid 10 at any given time. If it is detected that only a very small amount of power, below a predetermined threshold, is being fed back to the power supply grid from the system, it can be determined that the benefit of feeding this power back to the supply grid no longer outweighs the cost of operating the feedback device 14 in order to control that feedback. If this situation arises, the feedback device 14 can be deactivated and the DC bus signal from the power drive unit 12 can be monitored further in order to detect the next occasion on which a suitable amount of excess power is present in the power drive system, which justifies reactivation of the energy feedback device 14 for controlling energy feedback to the power supply grid 10.

A power drive system can be initially created including a feedback device such as the feedback device 14 shown in figure 1, in order to implement the control scheme described herein. Additionally or alternatively, a feedback device can be retrofitted to an existing power drive system in order to implement the control scheme. This retrofitting can be achieved in a simple, straightforward and cost effective manner and can lead to significant efficiency improvements for the retrofitted system.

The control scheme and system are particularly useful and efficient since the activation and deactivation of the (control means within the) feedback device can be controlled by simply monitoring the values of the power connections to the power drive unit (which may be a motor inverter) and to the grid, wherein that monitoring takes place within the feedback device (which may be a feedback inverter) or with a separate monitoring means provided in conjunction with the feedback device. No other control signal is needed for activation or deactivation of the control means within the feedback device. For activation, the DC voltage of the connection to the power drive unit is monitored, which rises if there is an excess of power. If this DC voltage goes above a first predetermined threshold, activation will take place. For deactivation, the feedback power of the connection to the grid is monitored. If that feedback power falls below a second predetermined threshold, deactivation takes place. Therefore retrofitting an existing system to include such a feedback device and to operate according to the present control scheme is straightforward to do.

Although a particular control scheme has been shown in figure 2 herein, variations thereon are possible. For example the feedback device 14 may be at least partly controlled according to time considerations. For example, the feedback device may be deactivated after it has been feeding energy back to the power supply grid for a predetermined amount of time. Alternatively or additionally, the feedback device 14 may be deactivated if it is determined that a particular amount of power (or energy) has already been fed back to the power supply grid from the feedback device either within a given time period and/or during the current feedback event.

Whilst a particular system has been schematically represented in figure 1 herein, it will be appreciated that variations thereon are possible. A feedback device or associated monitoring means may monitor something other than DC bus voltage in order to detect excess power within the power drive system. For example a current signal may be monitored. Additionally or alternatively, means may be provided for altering any of the voltage, the waveform, or the phase angle of a signal in order to make it suitable for feeding back power from the system to the power supply grid.

The first and second predetermined theresholds used for activation and deactivation purposes may be fixed, or may be changed over time. The feedback device may be controlled in accordance with a feedback loop or self-learning mechanism that enables optimisation of the first and/or second thresholds during operation of the power drive system.

The excess energy from the system may be fed to any suitable output, not just to a grid. For example, it could be fed to a suitable energy storage device.

The control scheme described herein can be executed by any suitable combination of hardware and/or software means. For example it may be executed using a computer such as a laptop or personal computer (PC) or by any suitable industrial controller or other suitable processor that is programmed to execute instructions for controlling operation of the feedback device and/or of any other means used in conjunction therewith. The processor may also be used for recording and/or storing data relating to the feedback device and/or relating to other components with the system for which power feedback is being controlled.

Instructions for implementing the control scheme may be recorded in a digital or analogue record carrier or computer readable medium. The record carrier may comprise optical storage means such as a readable disc or maybe in a form of a signal such as a focussed laser beam. A magnetic record carrier such as a computer hard drive may also be used for storage of such instructions. Alternatively, solid state storage or any suitable signal recording may be employed.

A computer program may be provided for use in the processor in order to implement the control described herein. Such computer implementation may be used to provide automated control of the feedback device. Alternatively or additionally, operation and control of the arrangements described herein may be carried out using any suitable combination of computer and user implemented steps.

The terms "energy" and "power" have both been used herein to describe the control scheme and system. However any individual use of one, other or both of these terms in the foregoing description is not intended to be limiting.

The following items are disclosed:
1. A method of controlling power for a system, said system comprising a first controller (14), a motor (16) for driving a load, and supply means (12) for supplying power to said motor (16); said method comprising:
   monitoring a signal representative of power within the system;
   using said signal to determine if the power within the system exceeds a first threshold;
   if it is determined that said first threshold has been exceeded, activating the first controller (14) to supply power from the system to an output.
2. A method as in item 1 wherein the system further comprises a second controller, wherein the method comprises using said second controller to control the supply of power to the motor (16).
3. A method as in item 1 or item 2 wherein the first threshold comprises an instantaneous power requirement for operation of the system.
4. A method as in any preceding item wherein the motor (16) is operable to provide power feedback to the supply means (12) and wherein the first controller (14) includes means for monitoring a signal representative of power feedback from the motor (16) to the supply means (12).
5. A method as in any preceding item further comprising the step of deactivating said first controller (14) after power has been supplied from the system to the output.
6. A method as in item 5 wherein the first controller (14) is deactivated after a predetermined time period has elapsed or after a predetermined amount of energy has been supplied from the system to the output.
7. A method as in item 5 wherein the first controller (14) is deactivated when it is determined that the level of power being supplied to the output from the system is below a second threshold.
8. A method as in any preceding item wherein the first controller (14) comprises a monitoring means for monitoring the signal representative of power within the system and a control means for controlling the power from the system to an output.
9. A method as in item 8 when dependent on item 6 or item 7 wherein the step of deactivating the first controller (14) comprises deactivating operation of the control means but allowing the monitoring means to continue to operate.
10. A method as in any preceding item wherein said signal representative of power within the system comprises any of: a voltage or a current.
11. A method as in any preceding item wherein the output is arranged to connect the system to a supply grid (10).
12. A method as in any preceding item wherein the step of activating the first controller (14) to supply power from the system to an output includes altering any of: the voltage, the waveform, or the phase angle of a signal in order to supply the power to the output.
13. A system comprising a first controller (14), a motor (16) for driving a load (20), and supply means (12) for supplying power to said motor (16); wherein said system is arranged to:
   monitor a signal representative of power within the system;
   use said signal to determine if the power within the system exceeds a first threshold; and,
   if it is determined that said first threshold has been exceeded, activate the first controller (14) to supply power from the system to an output.
14. A system as in item 13 further comprising a second controller arranged to control the supply of power to the motor (16).
15. A method as in any of items 1 to 12 or a system as in item 13 or item 14 wherein the first controller (14) comprises a first inverter.
16. A method as in any of items 2 to 12 or a system as in item 14 or item 15 wherein the second controller comprises a second inverter.
17. A computer or processing means adapted to perform the method of any of items 1 to 12.
18. A computer readable medium having computer-executable instructions adapted to cause a computer system to perform a method of items 1 to 12.
19. A record carrier having instructions stored thereon for execution by a processing means to carry out the method according to any of items 1 to 12.
20. The record carrier of item 19 wherein said record carrier includes an optical, magnetic or solid state storage means or a readable signal.
21. A computer program including instructions executable by a processing means for carrying out the method according to any of items 1 to 12.
22. A computer system comprising a memory and a processor, wherein the processor is arranged to perform the method of any of items 1 to 12.
23. A method, system, control scheme or apparatus substantially as described herein or as shown in the appended figures.

## Claims

1. A method of controlling power for a system, said system comprising a first controller (14), a motor (16) for driving a load, and supply means (12) for supplying power to said motor (16); said method comprising:
monitoring a signal representative of power within the system;
using said signal to determine if the power within the system exceeds a first threshold;
if it is determined that said first threshold has been exceeded, activating the first controller (14) to supply power from the system to an output.

2. A method as claimed in claim 1 wherein the system further comprises a second controller, wherein the method comprises using said second controller to control the supply of power to the motor (16).

3. A method as claimed in claim 1 or claim 2 wherein the first threshold comprises an instantaneous power requirement for operation of the system.

4. A method as claimed in any preceding claim wherein the motor (16) is operable to provide power feedback to the supply means (12) and wherein the first controller (14) includes means for monitoring a signal representative of power feedback from the motor (16) to the supply means (12).

5. A method as claimed in any preceding claim further comprising the step of deactivating said first controller (14) after power has been supplied from the system to the output.

6. A method as claimed in claim 5 wherein the first controller (14) is deactivated after a predetermined time period has elapsed or after a predetermined amount of energy has been supplied from the system to the output or when it is determined that the level of power being supplied to the output from the system is below a second threshold.

7. A method as claimed in any preceding claim wherein the first controller (14) comprises a monitoring means for monitoring the signal representative of power within the system and a control means for controlling the power from the system to an output.

8. A method as claimed in claim 7 when dependent on claim 6 wherein the step of deactivating the first controller (14) comprises deactivating operation of the control means but allowing the monitoring means to continue to operate.

9. A method as claimed in any preceding claim wherein the output is arranged to connect the system to a supply grid (10).

10. A method as claimed in any preceding claim wherein the step of activating the first controller (14) to supply power from the system to an output includes altering any of:
the voltage, the waveform, or the phase angle of a signal in order to supply the power to the output.

11. A system comprising a first controller (14), a motor (16) for driving a load (20), and supply means (12) for supplying power to said motor (16); wherein said system is arranged to:
monitor a signal representative of power within the system;
use said signal to determine if the power within the system exceeds a first threshold; and,
if it is determined that said first threshold has been exceeded, activate the first controller (14) to supply power from the system to an output.

12. A system as claimed in claim 11 further comprising a second controller arranged to control the supply of power to the motor (16).

13. A method as claimed in any of claims 1 to 10 or a system as claimed in claim 11 or claim 12 wherein the first controller (14) comprises a first inverter.

14. A method as claimed in any of claims 2 to 10 or a system as claimed in claim 12 or claim 13 wherein the second controller comprises a second inverter.

15. A computer readable medium having computer-executable instructions adapted to cause a computer system to perform a method of any of claims 1 to 10.
